# EUROPÄISCHE PATENTSCHRIFT

(11) **EP 2 501 601 B1**
(45) Veröffentlichungstag und Bekanntmachung des Hinweises auf die Patenterteilung: **10.12.2014**
(21) Anmeldenummer: 10771015.4
(22) Anmeldetag: 19.10.2010
(51) Int. Cl.: B62D 1/184

(54) **LENKSÄULENANORDNUNG FÜR EINEN KRAFTWAGEN**
STEERING COLUMN ASSEMBLY FOR A MOTOR VEHICLE
SYSTÈME DE COLONNE DE DIRECTION POUR UN VÉHICULE À MOTEUR

(30) Priorität: 21.11.2009 DE 102009054245
(43) Veröffentlichungstag der Anmeldung: 26.09.2012
(73) Patentinhaber: Daimler AG, 70327 Stuttgart (DE)
(72) Erfinder: HANSEN, Detlef, 22869 Hamburg (DE); HARTMANN, Horst, 22969 Witzhave (DE); KIRCHNER, Jens-Werner, 21244 Buchholz Holm Seppensen (DE); KITTLER, Holger, 22761 Hamburg (DE); MILICEVIC, Ivica, 21149 Hamburg (DE); PRIGGE, Ralf, 21357 Bardowick (DE)
(74) Vertreter: JENSEN & SON
(86) Internationale Anmeldenummer: PCT/EP2010/006385
(87) Internationale Veröffentlichungsnummer: WO 2011/060865

(56) Entgegenhaltungen:
- EP-A1- 0 900 943
- EP-A1- 1 125 821
- DE-A1-102006 034 714

## Beschreibung

Die Erfindung betrifft eine Lenksäulenanordnung für einen Kraftwagen, insbesondere einen Personenkraftwagen, der im Oberbegriff des Patentanspruchs 1 angegeben Art.

Aus der DE 10 2007 053 672 A1 ist bereits eine derartige Lenksäulenanordnung als bekannt zu entnehmen, bei welcher ein eine Lenkspindel lagerndes Mantelrohr einer Lenksäule mittels einer Klemmeinrichtung lösbar an einer karosserieseitigen Konsole festgelegt ist. Die Klemmeinrichtung umfasst dabei jeweilige konsolenseitige bzw. mantelrohrseitige Klemmkeile, welche eine entsprechende Klemmkraft zur Fixierung des Mantelrohrs bzw. der Lenksäule in einer bestimmten Position relativ zu der Konsole aufbringen.

Bei derartig mechanisch verstellbaren Lenksäulen muss das Klemmsystem bzw. die Klemmeinrichtung die Klemmkräfte an die fahrzeugfeste Konsole übergeben. Für eine hohe Steifigkeit bzw. Eigenfrequenz der Lenksäule müssen zunächst die das Mantelrohr haltenden Teile der Konsole - üblicherweise die Konsolenschenkel - möglichst starr ausgeführt sein. Für eine gute Übertragung der Klemmkraft müssen die Klemmschenkel hingegen möglichst weich ausgeführt sein. Dies führt ersichtlicher Weise zu einem Zielkonflikt.

Des Weiteren ist aus der EP 0 900 943 A1 eine Klemmanordnung für eine Fixierung der Lenksäule in der Höhenverstellung bekannt, bei der eine Zahnleiste 8 an einem Stützelement befestigt ist und mit einer beweglichen Zahnleiste 7 verriegelbar ist. Die Zahnleisten sind von einem Klemmbolzen 4 durchsetzt, der an einem Ende mit eine Mutter 14,15 verschraubt ist. Auf der festen Zahnleiste 8 stützt sich eine weiche Rückstellfeder 9 ab, die die bewegliche Zahnleiste 7 aus der Verriegelungsstellung zu drücken versucht. Zwischen der Mutter 14,15 und der beweglichen Zahnleiste 7 ist auf dem Bolzen 4 eine Tellerfeder angeordnet, mittels derer die Zahnleiste 7 mit einheitlicher Kraft über die gesamte Fläche beaufschlagt werden soll, um eine gleichmäßige Verriegelung der Zahnleisten 7 und 8 zu erzielen.

Aufgabe der vorliegenden Erfindung ist es daher, eine Lenksäulenanordnung der eingangs genannten Art zu schaffen, mittels welcher einerseits eine hohe Steifigkeit bzw. Eigenfrequenz der Lenksäule gegeben ist und mittels welcher sich andererseits eine hohe Klemmkraft übertragen lässt.

Diese Aufgabe wird erfindungsgemäß durch eine Lenksäulenanordnung mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um eine Lenksäulenanordnung zu schaffen, mittels welcher sich einerseits eine hohe Steifigkeit bzw. Eigenfrequenz der Lenksäule realisieren lässt und andererseits eine hohe Klemmkraft übertragen werden kann, weist die Klemmeinrichtung erfindungsgemäß wenigstens ein Klemmteil auf, welches in Querrichtung der Lenksäulenanordnung biegeweich ausgebildet ist. Das biegeweiche Klemmteil überträgt dabei die Klemmkraft der Klemmeinrichtung, wodurch sich ein besonders günstiger Wirkungsgrad der Klemmkraftübertragung erreichen lässt.

Erfindungsgemäß ist dabei das wenigstens eine Klemmteil in Längsrichtung der Lenksäulenanordnung schubsteif ausgebildet bzw. schubsteif an der Konsole der Lenksäulenanordnung angeordnet. Durch diese schubsteife Anordnung wird insbesondere die hohe Steifigkeit und Eigenfrequenz der Lenksäule erreicht.

Dabei hat es sich in weiterer Ausgestaltung der Erfindung als vorteilhaft gezeigt, wenn die Konsole eine Schenkelanordnung mit Schenkelteilen aufweist, zwischen welchen Klemmkeile der Klemmanordnung aufgenommen sind. Die Klemmkeile bzw. auch das Klemmteil selbst können somit in einfacher Weise in Längsrichtung der Lenksäulenanordnung schubsteif angebunden werden, um insgesamt eine hohe Steifigkeit und Eigenfrequenz der Lenksäule zu gewährleisten. Außerdem kann durch die Schenkelanordnung in einfacher Weise eine entsprechend biegeweiche Anordnung der Klemmkeile in Querrichtung der Lenksäule gewährleistet werden, um hierdurch eine hohe Klemmkraftübertragung zu ermöglichen.

Das wenigstens eine Klemmteil ist dabei in weiterer Ausgestaltung der Erfindung entweder klemmend oder auf eine andere Art und Weise an der Schenkelanordnung festgelegt. Hierdurch ergibt sich eine besonders einfach Montage und eine günstige Fixierung des Klemmteils an der Schenkelanordnung.

Eine weitere vorteilhafte Ausführung sieht vor, dass das wenigstens eine Klemmteil zwischen den Klemmkeilen der Klemmanordnung angeordnet ist. Somit ergibt sich auf besonders günstige Weise die beigeweiche Anordnung des Klemmteils an der Klemmeinrichtung.

Schließlich hat es sich als vorteilhaft gezeigt, wenn das wenigstens eine Klemmteil zur biegeweichen Ausbildung wenigstens einen, und insbesondere zwei Schlaufenbereiche, aufweist. Somit ist das Klemmteil auf einfache Weise in Querrichtung der Lenksäulenanordnung biegeweich gestaltbar.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

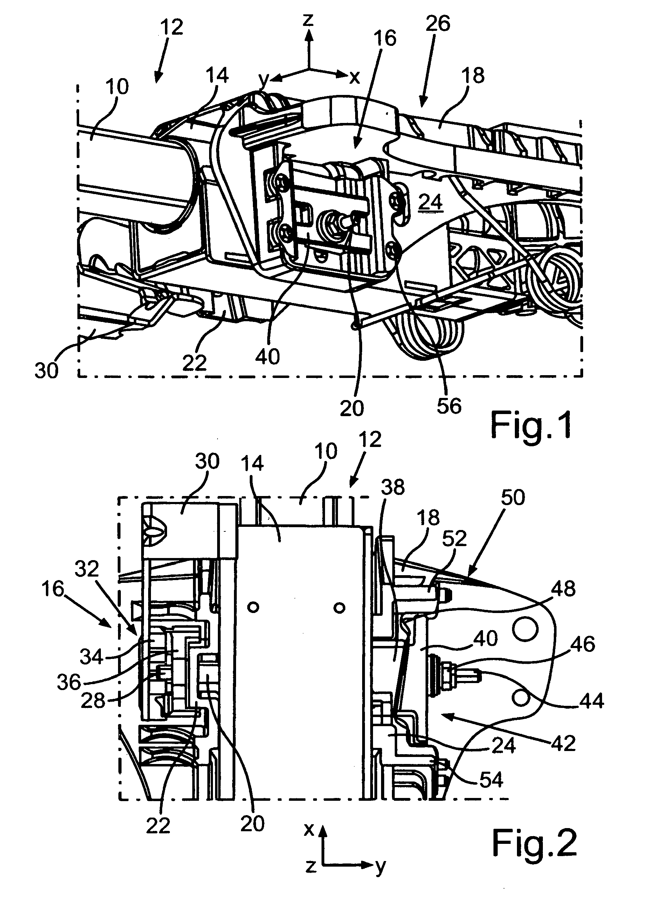

- Fig. 1: eine ausschnittsweise Perspektivansicht auf die Lenksäulenanordnung für einen Personenkraftwagen mit einer Konsole, an welcher ein eine Lenkspindel lagerndes Mantelrohr einer Lenksäule mittels einer Klemmeinrichtung lösbar festgelegt ist, wobei die Klemmeinrichtung zwei Klemmkeile umfasst, zwischen welchen ein Klemmteil angeordnet ist, welches in Querrichtung der Lenksäulenanordnung biegeweich ausgebildet ist und welches an einer zwei Schenkel umfassenden Schenkelanordnung der Konsole fixiert ist;
- Fig. 2: eine ausschnittsweise Unteransicht auf die Lenksäulenanordnung gemäß Fig.1 im Bereich der Klemmeinrichtung, mittels welcher das die Lenkspindel der Lenksäule lagernde Mantelrohr an der karosserieseitigen Konsole festgelegt ist;

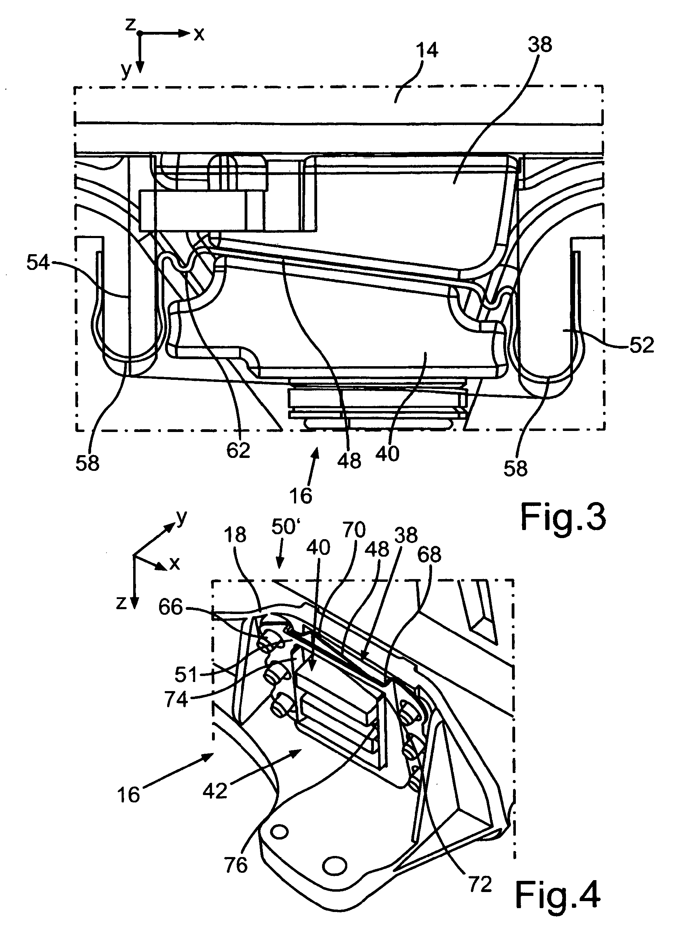

- Fig. 3: eine ausschnittsweise und vergrößerte Draufsicht auf die beiden Klemmkeile der Klemmeinrichtung, zwischen welchen das in Querrichtung biegeweich ausgebildete Klemmteil angeordnet ist, welches seinerseits an den beiden Schenkelteilen der Schenkelanordnung der Konsole aufgesteckt bzw. aufgepresst ist;
- Fig.4: eine alternative Ausgestaltung der Klemmanordnung der Klemmeinrichtung in einer ausschnittsweisen Perspektivansicht, wobei die Klemmanordnung wiederum zwei Klemmkeile umfasst, zwischen welchen ein Klemmteil angeordnet ist, welches in Querrichtung der Lenksäulenanordnung biegeweich ausgebildet ist, wobei der äußere Klemmkeil zwischen einer zwei Schenkel umfassenden Schenkelanordnung fixiert ist, welche auf Bolzen der Konsole der Lenksäule aufgesteckt ist, und in

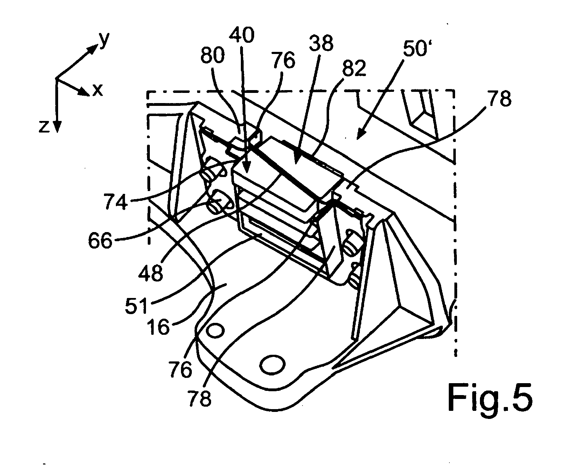

- Fig.5: eine ausschnittsweisen Perspektivansicht auf die Klemmanordnung gemäß Fig.4, wobei eine Klemmfedereinrichtung vorgesehen ist, mittels welcher der innere Klemmkeil gegen den korrespondierenden Schenkel der zugeordneten Schenkelanordnung gedrückt ist.

In Fig. 1 ist in einer ausschnittsweisen Perspektivansicht von schräg unten eine Lenksäulenanordnung für einen vorliegend als Personenkraftwagen ausgebildeten Kraftwagen dargestellt. Diese Lenksäulenanordnung ist darüber hinaus in Fig. 2 in einer ausschnittsweisen Unteransicht gezeigt.

In Zusammenschau der Fig. 1 und 2 ist dabei erkennbar, dass ein eine Lenkspindel 10 einer Lenksäule 12 lagerndes Mantelrohr 14 mittels einer im Weiteren noch näher erläuterten Klemmeinrichtung 16 an einer Konsole 18 festgelegt ist, welche ihrerseits in Einbaulage fest an der Karosserie des Kraftwagens angeordnet ist.

Die Klemmeinrichtung 16 umfasst einen Klemmbolzen 20, welcher sich im Wesentlichen zwischen zwei in Fahrzeughochrichtung verlaufenden Konsolenschenkel 22, 24, welche von einem im Fahrzeugquerrichtung bzw. Fahrzeuglängsrichtung verlaufenden Konsolenbereich 26 nach unten hin abkragen, verläuft.

Wie insbesondere aus Fig. 2 erkennbar ist, durchsetzt der Klemmbolzen 20 den Konsolenschenkel 22 und steht mit einem Ende 28 gegenüber diesem seitlich nach außen ab. Im Bereich dieses Endes 28 fasst die Klemmeinrichtung 16 eine Handhabe 30, welche um die Achse des Klemmbolzens 20 verschwenkbar ist. In der in Fig. 1 und 2 dargestellten Klemmstellung ist dabei eine Spanneinrichtung 32, welche vorliegend zwei miteinander zusammenwirkende und gegeneinander verdrehbare Spannscheiben 34, 36 umfasst, entsprechend vorgespannt. Mit anderen Worten sind die beiden Spannscheiben 34, 36, welche entsprechende stirnseitige Spannschrägen aufweisen, in dieser Stellung der Handhabe 30 so zueinander so positioniert, dass eine axiale Klemmkraft auf den Klemmbolzen 20 wirkt.

Diese Klemmkraft bewirkt auf der der Spanneinrichtung 32 abgewandten Seite eine Kraftbeaufschlagung von zwei Klemmkeilen 38, 40 einer Klemmanordnung 42. Dabei ist insbesondere aus Fig. 2 zunächst erkennbar, dass der Konsolenschenkel 24 im Bereich der Klemmanordnung 42 entsprechend ausgespart ist, so dass der Klemmkeil 38 direkt am Mantelrohr 14 anliegt. Der Klemmkeil 38 kann auch einstückig mit dem Mantelrohr 14 ausgebildet sein. Gleichfalls ist erkennbar, dass der Klemmbolzen 20 die beiden Klemmkeile 38, 40 durchsetzt, wobei auf dessen Ende 44 eine Spannschraube 46 aufgeschraubt ist. Das entsprechende Spannen der Spanneinrichtung 32 auf der der Klemmanordnung 42 gegenüberliegenden Seite bewirkt somit, dass bei sich in der Schließstellung befindender Handhabe 30 die entsprechende, in axialer Richtung des Klemmbolzens 20 wirkende Klemmkraft zur klemmenden Festlegung des Mantelrohrs 14 bzw. der Lenkspindel 10 an der Konsole 18 erzeugt wird.

Die Ausbildung der Klemmanordnung 42 mit den Klemmkeilen 38, 40 bewirkt dabei, dass bei einer unfallbedingten Axialverschiebung des Mantelrohrs eine erhöhte Haltekraft der Klemmeinrichtung 16 erzeugt wird. Mit anderen Worten wird somit eine erhöhte Klemmkraft bzw. eine Haltekraft der Klemmeinrichtung 16 dadurch erzeugt, dass die Klemmeanordnung 42 bei einer axialen Vorverlagerung des Mantelrohrs 14 eine erhöhte Haltekraft zwischen der fahrzeugseitigen Konsole 18 und dem Mantelrohr 14 der Lenksäule 12 erzeugt.

In Zusammenschau mit Fig. 3, welche in einer ausschnittsweisen vergrößerten Unteransicht die Lenksäulenansicht im Bereich der Klemmanordnung 42 zeigt, wird nun erkennbar, dass die Klemmeinrichtung 16 vorliegend ein Klemmteil 48 in Form eines Klemmblechs umfasst, welches zwischen der beiden Klemmkeilen 38, 40 angeordnet ist. Genauer gesagt ist dieses Klemmteil 48 an einer Schenkelanordnung 50 der Konsole 18 gehalten, welche durch zwei Schenkelteile 52, 54 gebildet ist. Diese Schenkelteile 52, 54 stehen gegenüber dem korrespondierenden Konsolenschenkel 24 in etwa senkrecht - also in Querrichtung der Lenksäulenanordnung -nach außen hin ab. Gemäß der Ausführungsform in der Fig. 1 ist das Klemmteil 48 mittels von vier oder mehr Bolzen 56-jeweils zwei oder mehr Bolzen 56 pro Schenkelteil 52, 54 - an diesen bzw. an dem entsprechenden Konsolenschenkel 24 befestigt. Die Bolzen 56 sind vorliegend als an die Schenkelteile 52, 54 angegossene Zapfen (Quicklocks) ausgebildet.

Bei der Ausführungsform gemäß Fig. 3 sind an den Enden des Klemmteils 48 jeweilig umgebogene Halter 58 vorgesehen, welche den jeweils korrespondierenden Schenkelteil 52, 54 klemmend umgreifen. Hierdurch wird also eine Fixierung erreicht, welche nicht durch die Bolzen 56, sondern durch ein Klemmen bzw. ein direktes Aufpressen erfolgt. Natürlich sind außerdem auch alle üblichen Fügeverfahren und mechanische Befestigungsverfahren denkbar.

Insbesondere in Fig. 3 ist erkennbar, dass das Klemmteil 48 zwei Schlaufenbereiche 60, 62 jeweils außenseitig eines Kontaktbereichs 64 in welchem der jeweilige Klemmkeil 38 bzw. 40 an dem als Klemmblech ausgebildeten Klemmteil 48 anliegt. Mit anderen Worten ergibt sich im Kontaktbereich 34 eine plane Auflage des jeweiligen Klemmkeils 38 bzw. 40 auf dem Klemmteil 48.

Die beiden Schlaufenbereiche 60, 62 bewirken, dass das Klemmteil 48 in Querrichtung der Lenksäulenanordnung - also in Erstreckungsrichtung des Klemmbolzens 20 - biegeweich ausgebildet ist. Diese biegeweiche Ausbildung des Klemmteils 48 bewirkt, dass eine gute Klemmkraftübertragung zwischen den Konsolenschenkeln 22, 24 möglich ist. Über eine gute Übertragung der Klemmkraft sollten nämlich die Konsolenschenkel 22, 24 möglichst weich ausgeführt sein, was jedoch einer hohen Steifigkeit und der Zählung einer hohen Eigenfrequenz der Lenksäule 12 entgegen spricht. Dieser Zielkonflikt wird durch das vorliegende Klemmteil 48 gelöst.

Des Weiteren ist insbesondere aus Fig. 3 erkennbar, dass das Klemmteil 48 in Längsrichtung der Lenksäulenanordnung - also senkrecht zu dem Klemmbolzen 20-schubsteif ausgebildet bzw. an der Konsole 18 angeordnet ist. Dies erfolgt dadurch, dass das Klemmteil 48 zwischen den Haltern 58 in seiner Länge auf den Abstand der beiden Schenkelteile 52, 54 angepasst ist. Somit kann sich das Klemmteil 48 nicht in Längsrichtung der Lenksäulenanordnung bewegen, sondern in ist in Längsrichtung der Lenksäulenanordnung vielmehr schubsteif ausgebildet. Hierdurch wird die gewünschte hohe Steifigkeit bzw. Eigenfrequenz der Lenksäule 12 möglich. Das biegeweiche Klemmteil 48 überträgt die Klemmkräfte besonders günstig auf die beiden Klemmkörper bzw. Klemmkeile 38, 40, wobei in Längsrichtung des Klemmteils 48 schubsteif die Steifigkeit erhöht ist.

Insgesamt ist somit erkennbar, dass vorliegend auf einfach Weise der Widerspruch zu lösen ist, nämlich gleichzeitig eine hohe Steifigkeit und Eigenfrequenz der Lenksäule 12 zu gewährleisten und andererseits eine gute Klemmkraftübertragung zu ermöglichen. Hierzu wird das in Querrichtung der Lenksäulenanordnung biegeweiche Klemmteil 48 eingesetzt, welches derart zwischen den beiden Schenkelteilen 52, 54 angeordnet ist, dass dieses in Längsrichtung der Lenksäulenanordnung schubsteif ist, um hierdurch die gewünschte hohe Steifigkeit bzw. Eigenfrequenz der Lenksäule zu erreichen.

In Fig. 4 ist eine alternative Ausgestaltung der Klemmanordnung 42 der Klemmeinrichtung 16 in einer ausschnittsweisen Perspektivansicht gezeigt, wobei die Klemmanordnung 42 wiederum zwei Klemmkeile 38, 40 umfasst, zwischen welchen das Klemmteil 48 angeordnet ist, welches in Querrichtung der Lenksäulenanordnung biegeweich ausgebildet ist.

Im Unterschied zu der Ausführungsform gemäß den Fig. 1 bis 3 ist jedoch vorliegend eine andersartige Schenkelanordnung 50' vorgesehen. Diese Schenkelanordnung 50' wird bei der Ausführungsform gemäß Fig.4 durch ein Blech 51 gebildet, welches auf korrespondierende Bolzen 66 (Quicklocks) der Konsole 18 aufgesteckt ist. Der innere, mantelrohrnahe Klemmkeil 38 ist dabei zwischen Schenkeln 68, 70, der äußere Klemmkeil 40 zwischen Schenkeln 72, 74 der Schenkelanordnung 50' angeordnet. Eine weitere Besonderheit besteht des weiteren darin, dass die Klemmkeile 38, 40 jeweils zweiteilig gestaltet sind.

Bei der Ausführungsform gemäß Fig.5, welche an sich eine im Wesentlichen zu Fig.4 analoge Schenkelanordnung 50' zeigt, ist der innere, mantelrohrnahe Klemmkeil 38 dabei zwischen Schenkeln 78, 80 angeordnet, welche auf Seiten der Konsole 16 angeformt sind. Der äußere Klemmkeil 40 ist analog zu Fig. 4 zwischen Schenkeln 72, 74 der Schenkelanordnung 50' angeordnet.

In Zusammenschau von Fig. 4 mit Fig. 5 wird eine weitere Besonderheit erkennbar. Bei den Ausführungsformen gemäß den Fig. 4 und 5 ist nämlich jeweils eine Klemmfedereinrichtung 76 vorgesehen, mittels welcher der innere Klemmkeil 38 - in Fahrzeuglängsrichtung (x-Richtung) nach hinten - gegen den korrespondierenden hinteren Schenkel 78 der zugeordneten Schenkelanordnung 50' gedrückt ist. Die Klemmfedereinrichtung 76 stützt sich dabei am vorderen Schenkel 80 ab.

Ebenfalls ist eine weitere Klemmfedereinrichtung 76 vorgesehen, mittels welcher der äußere Klemmkeil 40 - in Fahrzeuglängsrichtung (x-Richtung) nach vorne - gegen den korrespondierenden vorderen Schenkel 74 der zugeordneten Schenkelanordnung 50' gedrückt ist. Die Klemmfedereinrichtung 76 stützt sich dabei am hinteren Schenkel 72 ab.

Beide Klemmfedereinrichtungen 76 sind vorliegend als Blattfederelemente ausgebildet. Natürlich sind auch andere Gestaltungen denkbar. Das jeweilige Blattfederelement der entsprechenden Klemmfedereinrichtung 76 kann dabei beispielsweise an der Unterseite des jeweiligen Klemmkeils 38, 40 befestigt sein, beispielsweise angeschraubt, angeklebt.

Aus Fig. 5 ist des Weiteren eine Reibfolie 82 zwischen dem inneren Klemmkeil 38 und der Lenksäule 12, welche einstückig mit dem Blattfederelement der Klemmfedereinrichtungen 76 ausgebildet ist. Über diese Reibfolie 82 kann das Blattfederelement der Klemmfedereinrichtungen 76 am inneren Klemmkeil 38 befestigt sein.

Durch die Klemmfedereinrichtungen 76 wird insgesamt bei einer unfallbedingten Kraftbeaufschlagung und Rückverlagerung in der Lenksäule 12 ein besonders schnelles Ansprechen der Klemmanordnung 42 in Fahrzeuglängsrichtung (x-Richtung) erreicht, da die Klemmkeile 38, 40 sich stets in einer abgestützten Position befinden.

## Patentansprüche

1. Lenksäulenanordnung für einen Kraftwagen, insbesondere einen Personenkraftwagen, mit einer Konsole (18), an welcher ein eine Lenkspindel (10) lagerndes Mantelrohr (14) einer Lenksäule (12) mittels einer Klemmeinrichtung (16) lösbar festgelegt ist, wobei
die Klemmeinrichtung (16) wenigstens ein Klemmteil (48) aufweist, welches in Querrichtung (y-Richtung) der Lenksäulenanordnung biegeweich ausgebildet **dadurch gekennzeichnet, dass** das Klemmteil in Längsrichtung (x-Richtung und z-Richtung) der Lenksäulenanordnung schubsteif an der Konsole (18) angeordnet ist.

2. Lenksäulenanordnung nach Anspruch 1,
**dadurch gekennzeichnet, dass**
die Konsole (18) eine Schenkelanordnung (50) mit Schenkelteilen (52,54) aufweist, zwischen welchen Klemmkeile (38, 40) der Klemmeinrichtung (16) aufgenommen sind.

3. Lenksäulenanordnung nach Anspruch 1,
**dadurch gekennzeichnet, dass**
eine Schenkelanordnung (50') mit Schenkeln (68, 70, 72, 74, 78, 80) an der Konsole (18) befestigt ist, zwischen welchen Klemmkeile (38, 40) der Klemmeinrichtung (16) aufgenommen sind.

4. Lenksäulenanordnung nach Anspruch 2 oder 3,
**dadurch gekennzeichnet, dass**
das wenigstens eine Klemmteil (48) an der Schenkelanordnung (50;) festgelegt, insbesondere aufgesteckt, ist.

5. Lenksäulenanordnung nach einem der Ansprüche 2 bis 4,
**dadurch gekennzeichnet, dass**
das wenigstens eine Klemmteil (48) zwischen den Klemmkeilen (38, 40) der Klemmanordnung (42) angeordnet ist.

6. Lenksäulenanordnung nach einem der vorhergehenden Ansprüche,
**dadurch gekennzeichnet, dass**
das wenigstens eine Klemmteil (48) zur biegeweichen Ausbildung wenigstens einen, und insbesondere zwei Schlaufenbereiche (60, 62), aufweist.

7. Lenksäulenanordnung nach einem der vorhergehenden Ansprüche,
**dadurch gekennzeichnet, dass**
eine Klemmfedereinrichtung (76) vorgesehen ist, mittels welcher der jeweilige Klemmkeil (40) gegen einen korrespondierenden Schenkel (74, 78) der zugeordneten Schenkelanordnung (50') gedrückt ist.

## Claims

1. Steering column arrangement for a motor vehicle, in particular a motor car, having a bracket (18), to which an outer tube (14), of a steering column (12), accommodating a steering shaft (10) is fixed in a releasable manner by means of a clamping device (16), wherein
the clamping device (16) has at least one clamping part (48) which is flexibly designed in the transverse direction (y direction) of the steering column arrangement,
**characterised in that**
the clamping part is arranged on the bracket (18) in a rigid manner in the longitudinal direction (x direction and z direction).

2. Steering column arrangement according to claim 1,
**characterised in that**
the bracket (18) has a leg arrangement (50) with leg parts (52, 54), between which clamping wedges (38, 40) of the clamping device (16) are accommodated.

3. Steering column arrangement according to claim 1,
**characterised in that**
a leg arrangement (50') with legs (68, 70, 72, 74, 78, 80) is fixed to the bracket (18), between which clamping wedges (38, 40) of the clamping device (16) are accommodated.

4. Steering column arrangement according to claim 2 or 3,
**characterised in that**
the at least one clamping part (48) is fixed to, in being placed on, the leg arrangement (50).

5. Steering column arrangement according to one of the claims 2 to 4,
**characterised in that**
the at least one clamping part (48) is arranged between the clamping wedges (38, 40) of the clamping arrangement (42).

6. Steering column arrangement according to one of the preceding claims,
**characterised in that**
the at least one clamping part (48) has at least one, and in particular two loop portions (60, 62) for flexible design.

7. Steering column arrangement according to one of the preceding claims,
**characterised in that**
a spring clamping means (76) is provided, by means of which the respective clamping wedge (40) is pressed against a corresponding leg (74, 78) of the assigned leg arrangement (50').

## Revendications

1. Agencement de colonne de direction pour un véhicule automobile, en particulier une voiture particulière, équipé d'une console (18), sur laquelle un tube enveloppe (14) recevant un arbre de direction (10) d'une colonne de direction (12) est fixé amovible au moyen d'un dispositif de serrage (48), le dispositif de serrage (16) présentant au moins une partie de serrage (48), ladite partie de serrage est conçue de manière flexible dans la direction transversale (direction y) de l'agencement de colonne de direction, **caractérisé en ce que** la partie de serrage est conçue dans la direction longitudinale (direction x et direction y) de l'agencement de colonne de direction de manière à résister à la poussée sur la console (18).

2. Ensemble colonne de direction selon la revendication 1, **caractérisé en ce que** la console (18) présente un agencement de montant (50) doté de parties de montant (52, 54) entre lesquelles sont logées des cales de serrage (38, 40) du dispositif de serrage (16).

3. Agencement de colonne de direction selon la revendication 1, **caractérisé en ce qu'**un agencement de montant (50') est fixé au moyen de montants (68, 70, 72, 74, 78, 80) à la console (18) entre lesquels sont logées des cales serrage (38, 40) du dispositif de serrage (16).

4. Agencement de colonne de direction selon la revendication 2 ou 3, **caractérisé en ce qu'**au moins une partie de serrage (48) est fixée, en particulier emboîtée, dans l'agencement de montant (50).

5. Agencement de colonne de direction selon l'une quelconque des revendications 2 à 4, **caractérisé en ce que** la ou les parties de serrage (48) sont disposées entre les cales de serrage (38, 40) de l'agencement de serrage (42).

6. Agencement de colonne de direction selon l'une quelconque des revendications précédentes, **caractérisé en ce qu'**au moins une partie de serrage (48) conçue de manière flexible présente une ou en particulier deux zones de boucle (60, 62).

7. Agencement de colonne de direction selon l'une quelconque des revendications précédentes, **caractérisé en ce qu'**un dispositif de serrage à ressort (76) permet de comprimer chaque partie de serrage (40) contre un montant (74, 78) de l'agencement de montant associé (50).
